# EUROPEAN PATENT APPLICATION

(11) **EP 3 375 993 A1**
(43) Date of publication of application: **19.09.2018**
(21) Application number: 16864351.8
(22) Date of filing: 11.11.2016
(51) Int. Cl.: F01M 11/12

(54) **OIL LEVEL DETECTING DEVICE**

(30) Priority: 12.11.2015 JP 2015222127
(71) Applicant: Isuzu Motors Limited, Shinagawa-ku Tokyo 140-8722 (JP)
(72) Inventor: MIZUKAMI ,Naoki, Fujisawa-shi, Kanagawa 252-0881 (JP); MORI, Hiroaki, Fujisawa-shi, Kanagawa 252-0881 (JP); ASAKURA Tsutomu, Fujisawa-shi, Kanagawa 252-0881 (JP)
(74) Representative: Miller Sturt Kenyon
(86) International application number: PCT/JP2016/083514
(87) International publication number: WO 2017/082390

(57) **Abstract**

An oil level detecting device (1) includes: a tube insertion hole (60) which is provided in a crank case (30) upwardly and communicates with an oil chamber (50); a guide tube (70) which is inserted and fixed in the tube insertion hole (60); an oil level gauge (80) which is inserted into the guide tube (70) to be detachable from above; a partition (35) which is formed in the crank case (30) positioned between the oil chamber (50) and the tube insertion hole (60); and a through hole (90) which passes through the partition (35) and allows the oil chamber (50) to communicate with the tube insertion hole (60).

## Description

### TECHNICAL FIELD

This disclosure relates to an oil level detecting device for detecting a height position (hereinafter, referred to as an "oil level") of an oil surface of engine oil which is stored in an oil chamber in a crank case and an oil pan.

### BACKGROUND ART

Generally, an oil level detecting device includes a tube insertion hole which is provided in a crank case and communicates with an oil chamber, a guide tube which is inserted and fixed in the tube insertion hole, and an oil level gauge which is inserted into the guide tube in a detachable manner.

Herein, the oil level gauge is configured to seal a gap between an inner circumferential surface of the guide tube in the state of being inserted into the guide tube.

### Citation List

### Patent Literature

[Patent Literature 1]: Japanese Utility Model Application Publication No. 3-39693

### SUMMARY

### Technical Problem

However, when the oil level gauge is inserted into the guide tube, the oil level gauge pushes the air inside the guide tube to lower the oil surface in the tube insertion hole. Thus, it is difficult to accurately detect the oil level.

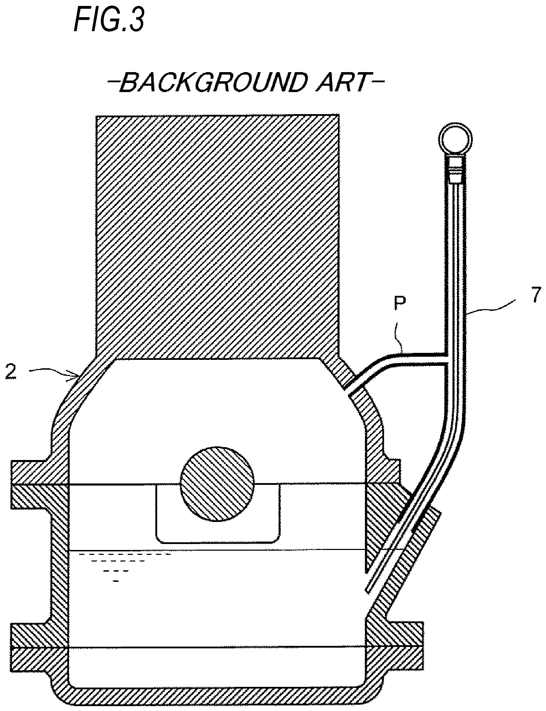

For this reason, in the background art, as illustrated in FIG. 3, a technique is used in which a branch pipe P is provided in a guide tube 7, and the air is released from the inside of the guide tube 7 into a cylinder block 2. However, in the technique, the branch pipe P is separately provided, so that a layout becomes complicated and the number of components and a production cost are increased, which is problematic.

The disclosure has been made in consideration of the above situation and provides an oil level detecting device which can release air from an inside of a guide tube to an oil chamber without providing an additional component.

### Solution to Problem

According to this disclosure, there is provided an oil level detecting device for detecting a level of oil stored in an oil chamber in a crank case and an oil pan, the oil level detecting device includes: a tube insertion hole which is provided in the crank case upwardly and communicates with the oil chamber; a guide tube which is inserted and fixed in the tube insertion hole; an oil level gauge which is inserted into the guide tube to be detachable from above; a partition which is formed in the crank case positioned between the oil chamber and the tube insertion hole; and a through hole which passes through the partition and allows the oil chamber to communicate with the tube insertion hole.

In the oil level detecting device, the through hole may include a first opening end which is open to the oil chamber and a second opening end which is open to the tube insertion hole, and the through hole may be formed to be inclined with respect to a virtual plane perpendicular to a cylinder shaft such that the first opening end is positioned above the second opening end.

In the oil level detecting device, the first opening end may be directed toward an upper end opening part of the crank case.

In the oil level detecting device, the second opening end may be provided to be positioned below the guide tube and above a predetermined maximum oil level.

### Advantageous Effects

According to the oil level detecting device of this disclosure, it is possible to release the air from the inside of the guide tube to the oil chamber without providing an additional component.

### BRIEF DESCRIPTION OF THE DRAWINGS

FIG. 1 is a sectional view schematically illustrating a configuration of an engine which uses an oil level detecting device according to the disclosure.
FIG. 2A is an enlarged view an A portion of FIG. 1, and illustrates a state where a support portion of the oil level gauge starts to be inserted into a guide tube.
FIG. 2B is an enlarged view of the A portion of FIG. 1, and illustrates a state where the support portion of the oil level gauge is completely inserted into the guide tube.
FIG. 3 is a sectional view schematically illustrating a configuration of an engine which uses an oil level detecting device of the background art.

### DESCRIPTION OF EMBODIMENTS

Hereinafter, an oil level detecting device according to an embodiment of the disclosure will be described with reference to the accompanying drawings. Incidentally, as for a vertical direction (to be described) in the embodiment, a vertical direction of a vehicle mounted with an engine is set as a reference.

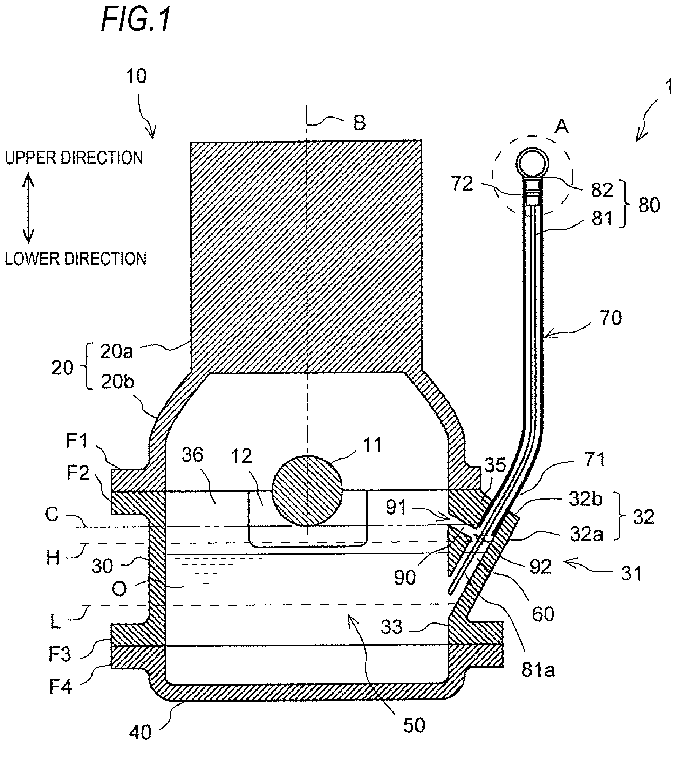

FIG. 1 is a sectional view schematically illustrating the engine which uses an oil level detecting device 1 of one embodiment of the disclosure. In the drawings, a one-dot chain line B indicates a cylinder shaft, a two-dot chain line C indicates a virtual plane perpendicular to the cylinder shaft B, a reference numeral H indicates a predetermined maximum oil level, and a reference numeral L indicates a predetermined minimum oil level. Incidentally, in the drawings, an oil level gauge 80 is in the state of being completely inserted into a guide tube 70.

As illustrated in FIG. 1, an engine 10 includes a cylinder block 20, a crank case 30 provided in a lower end of the cylinder block 20, and an oil pan 40 provided in a lower end of the crank case 30.

The cylinder block 20 has a cylinder part 20a and a skirt part 20b which is formed in the lower end of the cylinder part 20a. A piston (not illustrated) is contained to be reciprocatable inside the cylinder 20a. A crank shaft 11, a bearing cap 12, and the like are contained inside the skirt part 20b and the crank case 30. In addition, an oil chamber 50 storing engine oil O is provided inside the crank case 30 and the oil pan 40.

The cylinder block 20 and the crank case 30 are connected by both flanges F1 and F2. In addition, the crank case 30 and the oil pan 40 are connected by both flanges F3 and F4. The flanges connected to each other are fixed to be detachable by a fastening unit such as a bolt (not illustrated) in a state where a gasket (not illustrated) is interposed between the flanges.

The oil level detecting device 1 includes a tube insertion hole 60 which communicates with the oil chamber 50 provided in the crank case 30, the guide tube 70 fixed in the tube insertion hole 60, and the oil level gauge 80 inserted into the guide tube 70. In addition, in this embodiment, a partition 35 which is formed in the crank case 30 positioned between the oil chamber 50 and the tube insertion hole 60, and a through hole 90 (air vent hole) which passes through the partition 35 to communicate the oil chamber 50 with the tube insertion hole 60 are provided.

More specifically, the tube insertion hole 60 is provided upwardly, specifically obliquely upwardly, in the crank case 30. The "upwardly" described above includes the "obliquely upwardly".
A step part 32 having a substantially triangular cross section is formed in an outer wall 31 of the crank case 30, and the tube insertion hole 60 is provided in the step part 32. The tube insertion hole 60 extends along a lower inclined surface 32a of the step part 32, the upper end is open outward in an upper inclined surface 32b, and the lower end is open in the crank case 30. For example, in this embodiment, the tube insertion hole 60 is formed from a position of an inner wall surface 33 of the crank case 30 toward the position of the upper inclined surface 32b of the step part 32.

The guide tube 70 is formed by a cylindrical tube which uses a metal material or a heat resistant resin material. The guide tube 70 is fixed by inserting a lower end part 71 in the tube insertion hole 60, and is arranged to extend upward from the fixed position.

The oil level gauge 80 is configured to be inserted into the guide tube 70 to be detachable from above and to seal a gap from the inner circumferential surface of the guide tube 70 in the state of being inserted into the guide tube 70.

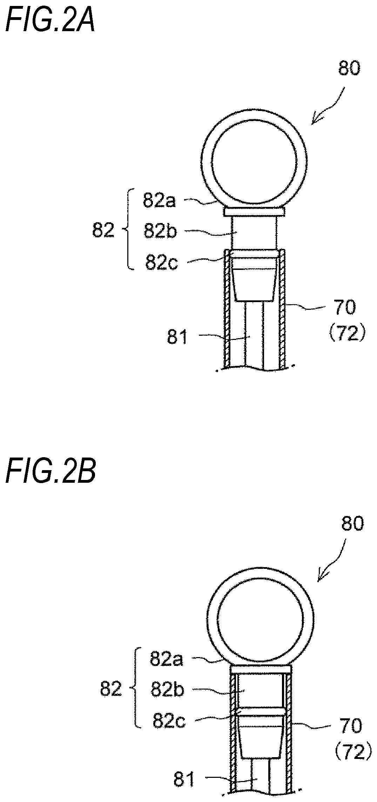

More specifically, as illustrated in FIGS. 2A and 2B, the oil level gauge 80 has a plate-shaped main body part 81 and a grip part 82.

The main body part 81 is made of a metal material having an elasticity, and has a width and a thickness that enable the main body part to be inserted into the guide tube 70. In addition, the main body part 81 has such a length that in a state where the oil level gauge 80 is completely inserted into the guide tube 70, the tip part 81a enters the engine oil O in the oil chamber 50 to detect the oil level.

The grip part 82 is made of a metal material or a heat resistant resin material, and has a grip part 82a and a support portion 82b supporting the main body part 81. In addition, in a state where the oil level gauge 80 is inserted into the guide tube 70, the support portion 82b is inserted into the guide tube 70, so as to regulate that the grip part 82a is inserted in the opening end of the guide tube 70. In addition, an O ring 82c which seals a gap from the inner circumferential surface of the guide tube 70 is attached in the outer circumferential surface positioned in the center in the vertical direction of the support portion 82b.

As illustrated in FIG. 1, in this embodiment, the partition 35 is formed to be integrated with the flange F2 of the crank case 30.

The through hole 90 includes a first opening end 91 which is open to the oil chamber 50 and a second opening end 92 which is open to the tube insertion hole 60, and is formed to be inclined with respect to the virtual plane C perpendicular to the cylinder shaft B such that the first opening end 91 is positioned upward from the second opening end 92.

More specifically, the first opening end 91 is directed toward an upper end opening part 36 of the crank case 30. In addition, the second opening end 92 is provided to be positioned below the lower end of the guide tube 70 and above a predetermined maximum oil level H.

Next, the operational effect of the oil level detecting device 1 of this embodiment will be described on the basis of the drawings. Herein, FIG. 2A illustrates a state where the support portion 82b of the oil level gauge 80 starts to be inserted into the guide tube 70, and FIG. 2B illustrates a state where the support portion 82b is completely inserted into the guide tube 70.

As illustrated in FIG. 2A, the oil level gauge 80 is inserted into the guide tube 70 in such a manner that the grip part 82a is held with a hand, first, the main body part 81 is inserted into the guide tube 70, and next, the support portion 82b is inserted into an upper end part 72 of the guide tube 70. In a state where the support portion 82b starts to be inserted into the guide tube 70, the O ring 82c abuts on the upper end of the guide tube 70. From the state, the O ring 82c is depressed to the position illustrated in FIG. 2B by pressing the grip part 82.

At that time, if the through hole 90 is not provided, the air in the guide tube 70 is pressed down by the movement of the O ring 82c, so that the oil surface in the tube insertion hole 60 is lowered. For this reason, it is difficult to detect the oil level accurately.

In this regard, in this embodiment, the through hole 90 (air vent hole) is provided in the partition 35 between the oil chamber 50 and the tube insertion hole 60. Accordingly, during the insertion of the oil level gauge 80, the air inside the tube insertion hole 60 can be released to the oil chamber 50 through the through hole 90. As a result, it can be suppressed that the oil surface is lowered by the air in the tube insertion hole 60, and the oil level can be detected accurately.

Specifically, in this embodiment, the through hole 90 can be formed with simple work that a hole is bored in the partition 35 by using a drill or the like. Therefore, for example, compared to the background art (see FIG. 3) that the branch pipe P is provided in the guide tube to release the air, the layout can be simplified, and an additional component is not provided necessarily. Thus, it is possible to suppress the number of the components and the production cost.

In addition, the through hole 90 is formed such that the first opening end 91 is positioned above the second opening end 92, and is inclined with respect to the virtual plane C perpendicular to the cylinder shaft B. Thus, the boring work can be performed easily from above. In addition, the first opening end 91 is directed toward the upper end opening part 36 of the crank case 30. For this reason, the boring work can be performed easily from the wide upper end opening part 36 of the crank case 30.

The second opening end 92 is provided to be positioned above the predetermined maximum oil level H. For this reason, even when the oil level is the maximum oil level H, the air inside the tube insertion hole 60 can be released from the second opening end 92 to the oil chamber 50.

Incidentally, the disclosure is not limited to the above-described embodiment but may be modified as appropriate without departing from the spirit and scope of the disclosure.

For example, in this embodiment, the plate-shaped main body part 81 made of a metal material is used in the oil level gauge 80, but an oil level gauge may be used which uses a wire-shaped main body part made of a metal material and a main body part made of a heat resistant resin.

This application claims priority to Japanese Patent Application (JP2015-222127), filed on November 12, 2015, the contents of which are incorporated herein by reference.

### Industrial Applicability

According to the oil level detecting device of the disclosure, it is possible to release the air from the inside of the guide tube to the oil chamber without providing an additional component.

### Reference Signs List

1: Oil level detecting device
30: Crank case
35: Partition
40: Oil pan
50: Oil chamber
60: Tube insertion hole
70: Guide tube
80: Oil level gauge
90: Through hole

## Claims

1. An oil level detecting device for detecting a level of oil stored in an oil chamber in a crank case and an oil pan, the oil level detecting device comprising:
a tube insertion hole which is provided in the crank case upwardly and communicates with the oil chamber;
a guide tube which is inserted and fixed in the tube insertion hole;
an oil level gauge which is inserted into the guide tube to be detachable from above;
a partition which is formed in the crank case positioned between the oil chamber and the tube insertion hole; and
a through hole which passes through the partition and allows the oil chamber to communicate with the tube insertion hole.

2. The oil level detecting device according to claim 1, wherein
the through hole includes a first opening end which is open to the oil chamber and a second opening end which is open to the tube insertion hole, and
the through hole is formed to be inclined with respect to a virtual plane perpendicular to a cylinder shaft such that the first opening end is positioned above the second opening end.

3. The oil level detecting device according to claim 2, wherein
the first opening end is directed toward an upper end opening part of the crank case.

4. The oil level detecting device according to claim 2, wherein
the second opening end is provided to be positioned below the guide tube and above a predetermined maximum oil level.

5. The oil level detecting device according to claim 3 wherein
the second opening end is provided to be positioned below the guide tube and above a predetermined maximum oil level.
